# EUROPEAN PATENT APPLICATION

(11) **EP 4 471 096 A1**
(43) Date of publication of application: **04.12.2024**
(21) Application number: 23780301.0
(22) Date of filing: 27.03.2023
(51) Int. Cl.: C08L 101/00, B01J 13/02, C08K 3/04, C08K 7/22

(54) **MOLDED ARTICLE**

(30) Priority: 28.03.2022 JP 2022051357
(71) Applicant: SEKISUI CHEMICAL CO., LTD., Osaka-shi, Osaka 530-0047 (JP)
(72) Inventor: OBINATA, Shuhei, Mishima-gun, Osaka 618-0021 (JP); WAKIYA, Takeshi, Mishima-gun, Osaka 618-0021 (JP); YAMADA, Yasuyuki, Mishima-gun, Osaka 618-0021 (JP)
(74) Representative: Cabinet Beau de Loménie
(86) International application number: PCT/JP2023/012112
(87) International publication number: WO 2023/190291

(57) **Abstract**

The present invention provides a molded article that is less prone to appearance defects due to surface irregularities or whitening and that also has high strength. Provided is a molded article including hollow particles each including a shell, the shell containing a resin and a black material, the hollow particles having an average particle size of 3 to 200 µm.

## Description

### TECHNICAL FIELD

The present invention relates to molded articles.

### BACKGROUND ART

Hollow particles, which are particles having an empty space inside, are used in a very wide range of applications, including various molded articles such as injection molded articles, injection compression molded articles, extrusion molded articles, and hollow molded articles, wallpaper, coating materials, sealants, adhesives, and diffusers, for the purposes of weight reduction, light diffusion, pore formation, heat insulation, sound insulation, low-dielectric properties, shock resistance, improved rigidity, improved texture, sink mark prevention, or improved coating properties, for example.

Known hollow particles include the hollow resin particles disclosed in Patent Literature 1, which are obtained using a specific surfactant.

Patent Literature 1 states that such thermoplastic hollow resin fine particles have higher light-diffusing properties than non-hollow spherical resin fine particles, and thus can provide an excellent effect when used in a light diffuser such as a light-diffusing plate.

### CITATION LIST

### - Patent Literature

Patent Literature 1: JP 2020-045399 A

### SUMMARY OF INVENTION

### - Technical problem

However, a molded article produced using the hollow particles disclosed in Patent Literature 1 and a resin may have, on its surface, white spots or surface irregularities derived from the hollow particles, resulting in poor appearance.

The present invention aims to provide a molded article that is less prone to appearance defects due to surface irregularities or whitening and that also has high strength.

### - Solution to problem

The disclosure (1) relates to a molded article including hollow particles each including a shell, the shell containing a resin and a black material, the hollow particles having an average particle size of 3 to 200 um.

The disclosure (2) relates to the molded article according to the disclosure (1), wherein the black material is a black pigment or a black dye.

The disclosure (3) relates to the molded article according to the disclosure (2), wherein the black pigment is at least one selected from the group consisting of a carbonous black pigment and an oxide black pigment.

The disclosure (4) relates to the molded article according to the disclosure (2), wherein the black dye is an organic black dye.

The disclosure (5) relates to the molded article according to any one of the disclosures (1) to (4), wherein the hollow particles have a black material content of 0.01 to 30% by weight relative to the hollow particles as a whole.

The disclosure (6) relates to the molded article according to any one of the disclosures (1) to (5), further including a colorant.

The present invention is described in detail below.

The molded article that is an embodiment of the present invention includes hollow particles each including a shell, the shell containing a resin and a black material.

The core of each of the hollow particles may be a void or filled with liquid or the like. The core is preferably a void. The core being a void has advantages such as less dimensional change of the molded article even under heat and less volatiles from liquid.

While foaming particles or the like may not sufficiently reduce the specific gravity due to the presence of unexpanded particles, hollow particles can efficiently reduce the specific gravity of the molded article because all particles can contribute to the reduction of the specific gravity.

In each of the hollow particles constituting the molded article that is an embodiment of the present invention, the shell contains a black material.

The black material contained allows the molded article to have higher strength and also even higher light-shielding properties and appearance quality. The black material appears black by absorbing all rays of sunlight, including those in the visible light region. Typical black pigments absorb light in the visible light region (about 380 to 780 nm) to appear black, but they actually also absorb light in the near-infrared region, including the wavelength region from 800 to 1,400 nm, which greatly contributes to heat.

The black material contained can also improve the dispersibility of the hollow particles in the molded article, which can make white spots less noticeable on the surface of the molded article.

The black material contained can also increase the heat retention of the molded article, which can decrease temperature change of the molded article.

The black material contained can also increase the shell strength of the hollow particles, making the hollow particles less breakable in kneading.

The lower limit of the OD value of the black material is preferably 1.5, and the upper limit thereof is preferably 5.0. An OD value within the above range can lead to a molded article having both high light-shielding properties and high jetness. In other words, the OD value of the black material is preferably 1.5 to 5.0.

The OD value of the black material means an OD value measured on an acrylic resin (coating film thickness 1 µm) containing the black material in an amount of 50% by weight.

The optical density (OD value) herein refers to the value X represented by X = -log(I_{T}/I₀), wherein I₀ is the intensity of light incident on an optical density varying element and I_{T} is the intensity of light transmitted through the element.

The optical density (OD value) can be measured using a chroma meter, a Macbeth densitometer, or the like.

Examples of the black material include black pigments, black dyes, and black conductive polymers. In particular, the black material preferably contains at least one selected from the group consisting of a black pigment, a black dye, and a black conductive polymer. Preferred among these is a black pigment.

Examples of the black pigment include inorganic black pigments such as carbonous black pigments and oxide black pigments, as well as organic black pigments. In particular, the black pigment is preferably at least one selected from the group consisting of a carbonous black pigment and an oxide black pigment.

Examples of the carbonous black pigment include carbon black, graphite, activated carbon, and graphene. Examples of the carbon black include furnace black, channel black, acetylene black, thermal black, lamp black, and bone black. Also usable are carbon nanotubes, carbon nanofibers, fullerenes, and graphite.

Examples of the oxide black pigment include titanium black, iron oxide, magnetite, and copper(I) oxide (cuprous oxide), as well as complex oxide black pigments containing the following as main metal components: copper and chromium; copper and manganese; copper, iron, and manganese; or cobalt, chromium, and iron.

Examples of other usable inorganic black pigments include: titanium black; and oxides, complex oxides, sulfides, sulfates, and carbonates of metals such as copper, iron, manganese, cobalt, chromium, nickel, zinc, calcium, and silver.

Examples of the organic black pigment include aniline black (C.I. Pigment Black 1).

More preferred among these is carbon black because it has excellent heat resistance and excellent dispersibility in resin, and also because it can impart a homogenous black color.

Examples of the black dye include inorganic black dyes and organic black dyes. Preferred among these are organic black dyes.

Examples of the inorganic black dyes include metal complex salt azo black dyes.

Examples of the metal complex salt azo black dyes include Neo Super Black C-832 (trade name Solvent Black 27, available from Chuo Synthetic Chemical Co., Ltd.).

Examples of the organic black dyes include disazo black dyes, azine black dyes, phthalocyanine black dyes, anthraquinone black dyes, and indigoid black dyes.

Examples of the disazo black dyes include OIL BLACK 860 (trade name Solvent Black 3, available from Orient Chemical Industries Co., Ltd.).

Examples of the azine black dyes include NUBIAN BLACK TH-807 (trade name Solvent Black 7, available from Orient Chemical Industries Co., Ltd.).

Examples of the black conductive polymer include polythiophene, polydopamine, polypyrrole, polyaniline, polyphenylenevinylene, polyphenylene, polyacetylene, polyquinoxaline, polyoxadiazole, polybenzothiadiazole, and polymers having two or more of these conductive skeletons. Preferred among these are polythiophene and derivatives thereof. Particularly preferred are poly(3,4-ethylenedioxythiophene) [PEDOT], poly(3,4-ethylenedioxythiophene)-poly(styrene sulfonate) [PEDOT/PSS], and polythienothiophene.

Preferred among the above black materials are black materials in the form of fine particles (black fine particles).

The black fine particles preferably have an average particle size of 1 um or less, more preferably 10 to 500 nm. Black fine particles having an average particle size in the range can be dispersed in resin and provide a color (black) with less unevenness.

The average particle size can be measured, for example, by observation using a particle size distribution analyzer (ELSZ-2000ZS, available from Otsuka Electronics Co., Ltd.). Alternatively, the average particle size can be measured by observation using a transmission electron microscope or the like on a thin film passing through or near the centers of the hollow particles dispersed in an embedding resin.

The lower limit of the black material content relative to the hollow particles as a whole is preferably 0.01% by weight, and the upper limit thereof is preferably 30% by weight. A black material content of 0.01% by weight or more can reduce fusion of the hollow particles in resin during molding. A black material content of 30% by weight or less can increase the shell strength against melt kneading during molding and also can further increase the appearance quality. The lower limit is more preferably 0.3% by weight, and the upper limit is more preferably 15% by weight, still more preferably 10% by weight, further preferably 7% by weight. In other words, the black material content is preferably 0.01 to 30% by weight, more preferably 0.3 to 15% by weight, still more preferably 0.3 to 10% by weight, particularly preferably 0.3 to 7% by weight.

The black material content can be determined as follows, for example. The hollow particles are heated in a nitrogen atmosphere to 600°C at 10°C/min, held for 10 minutes, cooled to 400°C at 10°C/min, and held for 10 minutes. The atmosphere is changed to the air, and the hollow particles are heated in the air to 1,000°C and held at 1,000°C for 10 minutes. At this time, the weight loss from 400°C to 1,000°C is measured to determine the black material content.

The black material content can also be calculated from the amounts of the black material and other components added in the production step.

The black material preferably has a specific surface area of 500 m²/g or less, more preferably 5 to 300 m²/g. A specific surface area in the above range allows the black material to disperse in resin and to provide a color (black color) with less unevenness.

The specific surface area can be measured using a surface area/pore size analyzer (NOVA 4200e, available from Quantachrome Instruments) by measuring an adsorption isotherm of nitrogen and calculating, from the measurement results, the specific surface area of the black material in conformity with the BET method.

The black material preferably has a dibutyl phthalate (DBP) oil absorption of 30 cm³/100 g or greater and 140 cm³/100 g or less. A DBP oil absorption within the above range can lead to an appropriate degree of structure and improved blackness. The lower limit of the DBP oil absorption is more preferably 45 cm³/100 g, and the upper limit thereof is more preferably 110 cm³/100 g.

The DBP oil absorption can be measured in conformity with JIS K 6221.

In the present invention, the black material may be present on the surface of the shell, in the shell, or on the inner surface of the shell. The black material is preferably present on the surface of the shell. The black material present on the surface of the shell can give good appearance to the molded body. Also preferably, the hollow particles each have an outermost layer, and the outermost layer contains the black material. Such a structure allows the hollow particles to have even higher dispersibility in resin during molding.

The black material may be present both on the surface of the shell and in the shell; in other words, a part of the black material may be exposed while another part is present in the shell. In such a case, the appearance defects due to surface irregularities and whitening can be further reduced.

The position of the black material can be determined using a transmission electron microscope or the like on a thin film passing through or near the centers of the hollow particles dispersed in an embedding resin.

The shell constituting each of the hollow particles contains a resin.

The resin is preferably, for example, a polymer of a monomer composition containing a monomer such as an unsaturated carboxylic acid monomer, a nitrile monomer, a polyfunctional monomer, a conjugated diene monomer, or a vinyl monomer. The resin may be a copolymer of a combination of two or more of them.

Particularly preferred is a polyfunctional monomer alone or a combination of an unsaturated carboxylic acid monomer and a nitrile monomer.

Preferred unsaturated carboxylic acid monomers are (meth)acrylates and unsaturated carboxylic acids.

Preferred (meth)acrylates are alkyl methacrylates such as methyl methacrylate, ethyl methacrylate, and n-butyl methacrylate and alicyclic/aromatic/heterocyclic ring-containing methacrylates such as cyclohexyl methacrylate, benzyl methacrylate, and isobornyl methacrylate.

Examples of the unsaturated carboxylic acids include unsaturated monocarboxylic acids such as acrylic acid, methacrylic acid, ethacrylic acid, crotonic acid, and cinnamic acid, maleic acid, itaconic acid, fumaric acid, citraconic acid, and chloromaleic acid.

Monoesters of the unsaturated dicarboxylic acids are also usable.

Examples of the monoesters of the unsaturated dicarboxylic acids include monomethyl maleate, monoethyl maleate, monobutyl maleate, monomethyl fumarate, monoethyl fumarate, monomethyl itaconate, monoethyl itaconate, and monobutyl itaconate.

Particularly preferred among these are acrylic acid, methacrylic acid, maleic acid, maleic anhydride, and itaconic acid.

Examples of the nitrile monomer include, but are not limited to, acrylonitrile, methacrylonitrile, α-chloroacrylonitrile, α-ethoxyacrylonitrile, fumaronitrile, and mixtures thereof. Particularly preferred among these are acrylonitrile and methacrylonitrile. These may be used alone or in combination of two or more thereof.

Examples of the polyfunctional monomer include monomers having two or more radically polymerizable double bonds. Specific examples thereof include divinyl benzene, di(meth)acrylates, and tri- or higher functional (meth)acrylates.

Examples of di(meth)acrylates include ethylene glycol di(meth)acrylate, diethylene glycol di(meth)acrylate, triethylene glycol di(meth)acrylate, propylene glycol di(meth)acrylate, and 1,4-butanediol di(meth)acrylate. Examples also include 1,6-hexanediol di(meth)acrylate, 1,9-nonanediol di(meth)acrylate, glycerol di(meth)acrylate, trimethylolpropane di(meth)acrylate, and dimethyloltricyclodecane di(meth)acrylate. Di(meth)acrylate of polyethylene glycol having a weight average molecular weight of 200 to 600 may also be used.

Examples of trifunctional (meth)acrylates include trimethylolpropane tri(meth)acrylate, ethylene oxidemodified trimethylolpropane tri(meth)acrylate, pentaerythritol tri(meth)acrylate, and triallylformal tri(meth)acrylate. Examples of tetra- or higher functional (meth)acrylates include pentaerythritol tetra(meth)acrylate and dipentaerythritol hexa(meth)acrylate.

Of these, trifunctional (meth)acrylates such as trimethylolpropane tri(meth)acrylate and bifunctional (meth)acrylates such as polyethylene glycol provide relatively uniform crosslinking in a shell mainly containing acrylonitrile.

When the monomer composition contains the polyfunctional monomer, the shell strength can be enhanced.

Examples of the conjugated diene monomer include butadiene, isoprene, and chloroprene.

Examples of the vinyl monomer include vinyl chloride, vinylidene chloride, vinyl acetate, and styrene. These may be used alone or in combination of two or more thereof.

The resin may contain a thermosetting resin.

Examples of the thermosetting resin include epoxy resins, phenolic resins, melamine resins, urea resins, polyimide resins, and bismaleimide resins. Preferred among these are epoxy resins and phenolic resins.

Examples of the epoxy resins include, but are not limited to, bisphenol A epoxy resins, bisphenol F epoxy resins, phenol novolac epoxy resins, cresol novolac epoxy resins, dicyclopentadiene epoxy resins, and glycidylamine epoxy resins.

Examples of the phenolic resins include novolac phenolic resins, resol phenolic resins, and benzylic ether phenolic resins. Preferred among these are novolac phenolic resins.

The thermosetting resin preferably has in the molecule two or more functional groups that react with a carboxy group. The presence of two or more functional groups that react with a carboxy group can further enhance the curability of the thermosetting resin. Particularly when the monomer composition contains a carboxy group-containing monomer, the carboxy group and the thermosetting resin can be more firmly bonded to each other due to the heat in thermal foaming, thus greatly improving the heat resistance and durability.

The thermosetting resin preferably does not have a radically polymerizable double bond.

Examples of the functional groups that react with a carboxy group include a glycidyl group, a phenol group, a methylol group, and an amino group. Preferred among these is a glycidyl group. The functional groups that react with a carboxy group may be of the same type or two or more different types.

To polymerize the monomers, a polymerization initiator is added to the monomer composition.

Examples of suitable polymerization initiators include dialkyl peroxides, diacyl peroxides, peroxy esters, peroxydicarbonates, and azo compounds.

Specific examples include: dialkyl peroxides such as methyl ethyl peroxide, di-t-butyl peroxide, and dicumyl peroxide; and diacyl peroxides such as isobutyl peroxide, benzoyl peroxide, 2,4-dichlorobenzoyl peroxide, and 3,5,5-trimethylhexanoyl peroxide.

Examples also include t-butyl peroxypivalate, t-hexyl peroxypivalate, t-butyl peroxyneodecanoate, t-hexyl peroxyneodecanoate, 1-cyclohexyl-1-methylethyl peroxyneodecanoate, and 1,1,3,3-tetramethylbutyl peroxyneodecanoate.

Examples also include: peroxy esters such as cumyl peroxyneodecanoate and (α,α-bis-neodecanoylperoxy)diisopropylbenzene; bis(4-t-butylcyclohexyl)peroxydicarbonate; di-n-propyl-oxydicarbonate; and diisopropyl peroxydicarbonate.

Examples also include peroxydicarbonates such as di(2-ethylethylperoxy)dicarbonate, dimethoxybutyl peroxydicarbonate, and di(3-methyl-3-methoxybutylperoxy)dicarbonate.

Examples also include azo compounds such as 2,2'-azobisisobutyronitrile, 2,2'-azobis(4-methoxy-2,4-dimethylvaleronitrile), 2,2'-azobis(2,4-dimethylvaleronitrile), and 1,1'-azobis(1-cyclohexanecarbonitrile).

The lower limit of the weight average molecular weight of the resin constituting the shell is preferably 50,000, and the upper limit thereof is preferably 2,000,000. In other words, the weight average molecular weight of the resin constituting the shell is preferably 50,000 to 2,000,000. An average molecular weight of 50,000 or greater can lead to improved shell strength. A weight average molecular weight of 2,000,000 or less can lead to appropriate shell strength.

The weight average molecular weight is a value determined in terms of polymethyl methacrylate by gel permeation chromatography (GPC) using DMF as a solvent. The GPC measurement to determine the weight average molecular weight in terms of polymethyl methacrylate may be performed using, for example, a column such as HSPgel RT MB-H (available from Waters) and a molecular weight standard such as M-75 (Shodex).

The shell may contain a metal cation. When the shell contains a metal cation and a carboxy group-containing copolymer, the metal cation reacts with the carboxy groups to cause ionic crosslinking of the copolymer. This improves heat resistance, resulting in a hollow particle that neither breaks nor shrinks over a long time in a hightemperature range. Moreover, the modulus of elasticity of such a shell is less likely to decrease in a hightemperature range, so that the hollow particle neither breaks nor shrinks in molding processing in which strong shear force is applied, such as knead molding, calender molding, extrusion molding, or injection molding.

The ionic crosslinking means formation of a crosslink between free carboxy groups present as side chains of the copolymer. The number of carboxy groups coordinated per valence of the metal cation depends on the type of the metal.

The metal cation may be any metal cation that reacts with the carboxy groups of the copolymer to ionically crosslink the copolymer. Examples include Li, Na, K, Zn, Mg, Ca, Ba, Sr, Mn, Al, Ti, Ru, Fe, Ni, Cu, Cs, Sn, Cr, and Pb ions. These may be used alone or in combination of two or more thereof. Preferred among these are Ca, Zn, and Al ions. A Zn ion is particularly suitable.

Any combination of two or more of the metal cations may be used. Preferred is a combination of an ion of an alkali metal and a metal cation other than the alkali metal. The ion of the alkali metal activates functional groups such as carboxy groups, and thus can promote reaction of the metal cation other than the alkali metal with the carboxy groups of the copolymer.

Examples of the alkali metal include Na, K, and Li.

The shell may further contain a stabilizer, an ultraviolet absorber, an antioxidant, an antistatic agent, a flame retardant, a silane coupling agent, a coloring agent, and/or the like, if necessary.

The lower limit of the average particle size of the hollow particles is 3 um, and the upper limit thereof is 200 um. An average particle size of 3 um or greater can lead to high porosity of the molded article. An average particle size of 200 um or less can lead to improved appearance quality of the molded article. The lower limit of the average particle size is preferably 5 µm, more preferably 15 um, and the upper limit thereof is preferably 150 um, more preferably 100 µm, still more preferably 80 um, particularly preferably 60 µm, more particularly preferably 50 um. In other words, the average particle size of the hollow particles is 3 to 200 um, preferably 5 to 150 µm, more preferably 15 to 100 µm, still more preferably 15 to 80 um, particularly preferably 15 to 60 µm, more particularly preferably 15 to 50 um.

The hollow particles preferably have a CV (coefficient of variation) value of the average particle size of 40% or lower, more preferably 30% lower, still more preferably 20% or lower. A CV value of 40% or lower can result in a molded article with less variation in cell size and in thickness. Moreover, since such a molded article has cell with less variation at the surface, the molded article can have excellent appearance.

The lower limit of the CV value is preferably, but not limited, 0%.

The average particle size of the hollow particles means the number average particle size. It can be measured by cutting the molded article to obtain a cross section, measuring the particle size of at least 50 hollow particles on the cross section with a SEM or the like, and calculating the average of the particle sizes. The CV value also can be measured in this measurement. For hollow particles having a cross section that is not perfectly circular, the average of the values (maximum diameter + minimum diameter)/2 is determined as the particle size.

The hollow particles preferably have a ratio (A/B) of the average particle size (A) of the black material to a shell thickness (B) of 0.01 to 20. With an A/B ratio within the above range, the shell can have high strength while the appearance quality is maintained. The lower limit of the ratio is more preferably 0.2, and the upper limit is more preferably 5.

The shell thickness is preferably 0.01 um or greater and 1 um or less.

The hollow particles preferably have a ratio (B/C) of the shell thickness (B) to the average particle size (C) of the hollow particles of 0.001 to 0.01.

The shell thickness can be measured by cutting the molded article to obtain a cross section, measuring, with a SEM or the like, the shell thickness of 10 hollow particles in the cross section at five random sites for each particle, and calculating the average.

The hollow particles preferably have an optical density (OD value) of 0.5 or higher. An optical density (OD value) of 0.5 or higher can lead to a black coating film or black matrix having both high light-shielding properties and high jetness. The lower limit is more preferably 0.8, and the upper limit is preferably 1.6. In other words, the OD value of the hollow particles is preferably 0.5 to 1.6, more preferably 0.8 to 1.6.

The optical density (OD value) can be measured with a Macbeth densitometer or the like.

The hollow particles may be produced by any method. For example, they can be produced through the steps of: preparing an aqueous dispersion medium containing a dispersant; adding the monomer composition, the black material, and a hollowing agent to the aqueous dispersion medium; and polymerizing the monomers.

To produce the hollow particles, first, the step of preparing an aqueous dispersion medium is performed. Specifically, for example, water, a dispersant, and optionally an auxiliary stabilizer are put into a polymerization reaction vessel to give an aqueous dispersion medium containing the dispersant.

The dispersant is preferably an emulsifier such as polyvinyl alcohol, or at least one inorganic compound selected from the group consisting of a Si compound and a Mg compound.

The inorganic compound contained in the aqueous dispersion medium can reduce fusion of the hollow particles during molding.

The inorganic compound is different from the black material.

The Si compound and Mg compound preferably contain an oxide, hydroxide, carbonate, or hydrogencarbonate of silicon or magnesium.

These Si compounds and Mg compounds may be used alone or in combination of two or more thereof.

Examples of the Si compound include colloidal silica, silica sol, sodium silicate solution No. 3, sodium orthosilicate, and sodium metasilicate. Preferred among these is colloidal silica.

Examples of the Mg compound include magnesium oxide, magnesium hydroxide, magnesium hydroxide oxide, hydrotalcite, dihydrotalcite, magnesium carbonate, basic magnesium carbonate, calcium magnesium carbonate, magnesium phosphate, magnesium hydrogen phosphate, magnesium pyrophosphate, and magnesium borate. Preferred among these is magnesium hydroxide.

Examples of other inorganic compounds that may be added include calcium phosphate, aluminum hydroxide, ferric hydroxide, barium sulfate, calcium sulfate, sodium sulfate, calcium oxalate, calcium carbonate, and barium carbonate. If necessary, an inorganic salt (e.g., sodium chloride or sodium sulfate), an alkali metal nitrite, stannous chloride, stannic chloride, potassium bichromate, and/or the like may be added.

The inorganic compound is preferably in the form of fine particles.

The inorganic compound in the form of fine particles preferably has a primary particle size of 0.5 um or less, more preferably 5 to 100 nm (0.1 µm). A primary particle size within the above range can lead to less fusion of the hollow particles in resin during molding. The primary particle size can be measured by observation using a scanning electron microscope (Regulus8220, available from Hitachi High-Technologies Corporation).

The lower limit of the amount of the dispersant added is preferably 0.5% by weight, and the upper limit thereof is preferably 30% by weight, relative to the monomer composition as a whole. The dispersant added in an amount of 0.5% by weight or more can reduce aggregation in formation of the hollow particles. The dispersant added in an amount of 30% by weight or less can provide even higher dispersibility. The lower limit is more preferably 1% by weight, and the upper limit is more preferably 25% by weight. In other words, the amount of the dispersant added is preferably 0.5 to 30% by weight, more preferably 1 to 25% by weight.

Examples of the auxiliary stabilizer include condensation products of diethanolamine and aliphatic dicarboxylic acids and condensation products of urea and formaldehyde. Examples also include polyvinylpyrrolidone, polyethylene oxide, polyethyleneimine, tetramethylammonium hydroxide, gelatin, methylcellulose, dioctyl sulfosuccinate, sorbitan esters, and emulsifiers.

In addition to the auxiliary stabilizer, a condensation product and/or a water-soluble nitrogen compound may be added.

The condensation product is preferably a condensation product of diethanolamine and an aliphatic dicarboxylic acid, particularly preferably a condensation product of diethanolamine and adipic acid or a condensation product of diethanolamine and itaconic acid.

Examples of the water-soluble nitrogen compound include polyvinylpyrrolidone, polyethyleneimine, polyoxyethylenealkylamine, and polydialkylaminoalkyl (meth)acrylates typified by polydimethylaminoethyl methacrylate and polydimethylaminoethyl acrylate. Examples also include polydialkylaminoalkyl(meth)acrylamides typified by polydimethylaminopropylacrylamide and polydimethylaminopropylmethacrylamide, polyacrylamide, polycationic acrylamide, polyamine sulfone, and polyallylamine. Preferred among them is polyvinylpyrrolidone.

The aqueous dispersion medium containing the dispersant and optionally the auxiliary stabilizer is prepared by blending the materials with deionized water. The pH of the aqueous phase at this time is appropriately determined according to the types of the dispersant and the auxiliary stabilizer used. For example, when the dispersant used is a Si compound such as colloidal silica, an acidic aqueous dispersion medium is used for polymerization. The aqueous dispersion medium may be made acidic by optionally adding an acid such as hydrochloric acid to adjust the system to pH 3 to 4. When the inorganic compound used is a Mg compound such as magnesium hydroxide or calcium phosphate, an alkaline aqueous dispersion medium adjusted to pH 8 to 11 is used for polymerization.

Subsequently, with the method of producing the hollow particles, the step of adding the monomer composition, the black material, and a hollowing agent to the aqueous dispersion medium is performed.

In this step, the monomer composition, the black material, and the hollowing agent may be separately added to the aqueous dispersion medium to prepare an oily mixture liquid in the aqueous dispersion medium. Typically, however, they are mixed in advance to form an oily mixture liquid, and the obtained oily mixture liquid is added to the aqueous dispersion medium. In this case, the oily mixture liquid and the aqueous dispersion medium may be prepared in separate containers in advance, mixed in another container with stirring to disperse the oily mixture liquid in the aqueous dispersion medium, and then added to the polymerization reaction vessel. In this step, the dispersant may be present at the interface between the aqueous dispersion medium and the oil droplets made of the oily mixture liquid.

The monomers are polymerized using a polymerization initiator. The polymerization initiator may be added to the oily mixture liquid in advance, or may be added after the aqueous dispersion medium and the oily mixture liquid are mixed by stirring in the polymerization reaction vessel.

The black material and the dispersant may be added to the aqueous dispersion medium or may be added later.

In particular, the average particle size of the resulting hollow particles can be controlled by adjusting the components of the hollow particles (particularly the monomers, the hollowing agent), adjusting the amounts of the components to be added, and/or adjusting the reaction process in producing the hollow particles. Examples of adjustments of the reaction process include sufficient preliminary stirring before emulsifying the oily mixture liquid in the aqueous dispersion medium, and emulsifying the oily mixture liquid at a predetermined particle size in the aqueous dispersion medium.

In particular, the amount of the hollowing agent added is preferably 50 to 2,800 parts by weight relative to 10 parts by weight of the monomer composition.

The oily mixture liquid may be emulsified at a predetermined particle size in the aqueous dispersion medium by, for example, a method including stirring with a homomixer (e.g., available from Tokushu Kika Kogyo Co., Ltd.), a homogenizer, or the like, or a method including passing the oily mixture liquid and the aqueous dispersion medium through a static dispersion apparatus such as a line mixer or an element-type static disperser.

The average particle size of the resulting hollow particles can be controlled also by adjusting the stirring force (e.g., rotation rate) in the stirring.

Here, the aqueous dispersion medium and the monomer composition may be separately fed to the static dispersion apparatus. Alternatively, the aqueous dispersion medium and the monomer composition may be mixed and stirred in advance and the obtained dispersion may be fed to the dispersion apparatus.

The hollowing agent is a substance to form a hollow as the core.

The hollowing agent is preferably an organic solvent having a boiling point of -50°C to 100°C because such an organic solvent is easily handleable in drying in the hollowing step.

Examples of the hollowing agent include low molecular weight hydrocarbons such as n-butane, isobutane, butane, butene, isobutene, n-pentane, isopentane, neopentane, n-hexane, cyclohexane, heptane, petroleum ether, isooctane, octane, decane, isododecane, dodecane, and hexanedecane. Examples also include ethyl acetate, methyl ethyl ketone, acetone, methylene chloride, chloroform, and carbon tetrachloride. Preferred among these are cyclohexane, isobutane, n-butane, n-pentane, isopentane, n-hexane, isooctane, isododecane, and mixtures thereof. These hollowing agents may be used alone or in combination of two or more thereof.

The hollowing agent may be a pyrolytic compound that is pyrolyzed into a gas form when heated.

The hollow particles can be produced by performing a step of polymerizing the monomers by heating and pressurizing the dispersion obtained through the above steps, and a washing step.

In particular, in the step of polymerizing the monomers, the average particle size of the resulting hollow particles can be controlled by setting the temperature in the heating at 40°C to 100°C and setting the pressure in the pressurizing at 0.2 to 1.0 MPa.

The molded article that is an embodiment of the present invention contains a base resin in addition to the hollow particles.

The base resin is preferably a thermoplastic resin. Specific examples of the thermoplastic resin include low density polyethylene (LDPE), polyolefins such as polypropylene (PP), ethylene-vinyl acetate copolymers (EVA), vinyl chloride, polystyrene, thermoplastic elastomers, olefinic thermoplastic elastomers (TPV), and ethylene-methyl methacrylate copolymers (EMMA).

Preferred among these are LDPE, EVA, and EMMA because they have low melting points and thus are easy to process. These may be used alone or in combination of two or more thereof.

The molded article that is an embodiment of the present invention may contain any amount of the hollow particles. The lower limit of the amount relative to 100 parts by weight of the base resin is preferably 1 part by weight, and the upper limit thereof is preferably 90 parts by weight.

The molded article that is an embodiment of the present invention preferably further contains a colorant.

The colorant may be a common dye, organic pigment, or inorganic pigment, and is preferably an organic pigment. Examples of the organic pigment include various color pigments such as blue pigments, red pigments, yellow pigments, green pigments, violet pigments, and orange pigments. Examples of the organic pigment in terms of the structure include polycyclic pigments such as: phthalocyanine pigments; azo pigments such as monoazo pigments, diazo pigments, and condensed diazo pigments; diketopyrrolopyrrole pigments; isoindolinone pigments; isoindoline pigments; quinacridone pigments; indigo pigments; thioindigo pigments; quinophthalone pigments; dioxazine pigments; anthraquinone pigments; perylene pigments; and perynone pigments. The colorant may be the same as the black material.

Examples of the blue pigments include organic pigments containing an organic compound as a main component, such as phthalocyanine pigments, anthraquinone pigments, and dioxazine pigments. Preferred among these are phthalocyanine pigments. More preferred are metal phthalocyanine pigments and monohalogenated metal phthalocyanine pigments (halogenated metal phthalocyanine pigments having one halogen atom in the molecule).

Preferred phthalocyanine pigments include copper phthalocyanine pigments and monohalogenated copper phthalocyanine pigments.

Specific examples of compounds classified as blue pigments in the Color Index (C.I.) include C.I. Pigment Blues 1, 1:2, 9, 14, 15, 15:1, 15:2, 15:3, 15:4, 15:5, 15:6, 16, 17, 17:1, 19, 22, 25, 27, 28, 29, 33, 35, 36, 56, 56:1, 60, 61, 61:1, 62, 63, 66, 67, 68, 71, 72, 73, 74, 75, 76, 78, 79, and 80. Preferred phthalocyanine pigments are C.I. Pigment Blues 15, 15:1, 15:2, 15:3, 15:4, 15:6, 16, 17, 17:1, and 75. Preferred copper phthalocyanine pigments and monohalogenated copper phthalocyanine pigments are C.I. Pigment Blues 15, 15:1, 15:2, 15:3, 15:4, 15:6, 16, 17, and 17:1. A preferred anthraquinone pigment is C.I. Pigment Blue 60. A preferred dioxazine pigment is C.I. Pigment Blue 80.

Examples of the red pigments include C.I. Pigment Reds 1, 2, 3, 4, 5, 6, 7, 8, 9, 12, 14, 15, 16, 17, 21, 22, 23, 31, 32, 37, 38, 41, 47, 48:1, 48:2, 48:3, 48:4, 49, 49:1, 49:2, 50:1, 52:2, 53, 53:1, 53:2, 53:3, 57, 57:1, 57:2, 58:4, 60, 63, 63:1, 63:2, 64, 64:1, 68, 69, 81, 81:1, 81:2, 81:3, 81:4, 83, 88, 90:1, 101, 101:1, 104, 108, 108:1, 109, 112, 113, 114, 122, 123, 144, 146, 147, 149, 151, 166, 168, 169, 170, 172, 173, 174, 175, 176, 177, 178, 179, 181, 184, 185, 187, 188, 190, 193, 194, 200, 202, 206, 207, 208, 209, 210, 214, 215, 216, 221, 224, 230, 231, 232, 233, 235, 236, 237, 238, 239, 242, 243, 245, 247, 249, 250, 251, 253, 254, 255, 256, 257, 258, 259, 260, 262, 263, 264, 265, 266, 267, 268, 269, 270, 271, 272, 273, 274, 275, 276, and 291.

Examples of the yellow pigments include C.I. Pigment Yellows 1, 1;1, 2, 3, 4, 5, 6, 9, 10, 12, 13, 14, 16, 17, 24, 31, 32, 34, 35, 35:1, 36, 36:1, 37, 37:1, 40, 41, 42, 43, 48, 53, 55, 60, 61, 62, 62:1, 63, 65, 73, 74, 75, 77, 81, 83, 87, 93, 94, 95, 97, 98, 100, 101, 104, 105, 108, 109, 110, 111, 116, 117, 119, 120, 126, 127, 127:1, 128, 129, 133, 134, 136, 138, 139, 142, 147, 148, 150, 151, 153, 154, 155, 157, 158, 159, 160, 161, 162, 163, 164, 165, 166, 167, 168, 169, 170, 172, 180, 181, 182, 183, 184, 185, 188, 189, 190, 191, 191:1, 192, 193, 194, 195, 196, 197, 198, 199, 200, 202, 203, 204, 205, 206, 207, 208, 213, and 215.

Examples of the green pigments include C.I. Pigment Greens 1, 2, 4, 7, 8, 10, 13, 14, 15, 17, 18, 19, 26, 36, 45, 48, 50, 51, 54, 55, 58, 59, 62, and 63, aluminum phthalocyanine, polyhalogenated aluminum phthalocyanine, aluminum phthalocyanine hydroxide, diphenoxyphosphinyloxyaluminum phthalocyanine, diphenylphosphinyloxyaluminum phthalocyanine, polyhalogenated diphenoxyphosphinyloxyaluminum phthalocyanine, and polyhalogenated diphenylphosphinyloxyaluminum phthalocyanine.

Examples of the violet pigments include C.I. Pigment Violets 1, 1:1, 2, 2:2, 3, 3:1, 3:3, 5, 5:1, 14, 15, 16, 19, 23, 25, 27, 29, 31, 32, 37, 39, 42, 44, 47, 49, and 50.

Examples of the orange pigments include C.I. Pigment Oranges 1, 2, 5, 13, 16, 17, 19, 20, 21, 22, 23, 24, 34, 36, 38, 39, 43, 46, 48, 49, 61, 62, 64, 65, 67, 68, 69, 70, 71, 72, 73, 74, 75, 78, and 79.

Examples of the inorganic pigments include barium sulfate, lead sulfate, titanium oxide (e.g., rutile titanium oxide, anatase titanium oxide), yellow lead, red iron oxide, and chromium oxide.

The hollow particles enable the production of a molded article with high appearance quality, for example with an irregular shape. The molded article can be suitably used in applications such as housing wallpaper and automotive interior materials.

The molded article that is an embodiment of the present invention may be produced by any method, such as knead molding, calender molding, extrusion molding, or injection molding.

### - Advantageous Effects of Invention

The present invention can provide a molded article that is less prone to appearance defects due to surface irregularities or whitening and that also has high strength.

### DESCRIPTION OF EMBODIMENTS

Embodiments of the present invention are more specifically described in the following with reference to, but not limited to, examples.

### (Example 1)

### (Preparation of hollow particles)

An amount of 2.0 parts by weight of polyvinyl alcohol (PVA, available from Mitsubishi Chemical Corporation, GH-20, viscosity 40 to 46 mPa·s, degree of saponification 86.5 to 89.0 mol%) as a dispersant was mixed with 250 parts by weight of ion-exchanged water to give an aqueous medium.

Subsequently, to 10 parts by weight of divinyl benzene as a monomer composition were added 0.2 parts by weight of an amine salt of polyether ester (DISPARLON-234, available from Kusumoto Chemicals, Ltd.) as an additive and 0.26 parts by weight of carbon black as a black material. The mixture was sonicated for dispersing treatment. Subsequently, 200 parts by weight of cyclohexane was added, whereby a mixed solution was obtained. To the mixed solution was added 0.8 parts by weight of a polymerization initiator (2,2'-azobisisobutyronitrile). The solution was then put in an autoclave and mixed.

The carbon black was MA100 (available from Mitsubishi Chemical Corporation, primary average particle size 24 nm, specific surface area 110 m²/g, DBP oil absorption 100 cm³/100 g).

The solution was then added to the aqueous medium and suspended to give a dispersion.

The obtained dispersion was mixed by stirring with a homogenizer, fed into a nitrogen-purged pressure polymerizer, and reacted under pressure (0.5 MPa) at 60°C for 20 hours to give a reaction product. Filtration and water washing of the reaction product were repeated, followed by drying to give hollow particles.

The black material content was calculated from the amount of the black material added and the amounts of other components added.

The obtained hollow particles were added to an embedding resin (Technovit 4000, available from Kulzer) and dispersed to give a resin with embedded hollow particles. A thin film was prepared with a microtome (EM UC7, available from LEICA) such that it passed through or near the centers of the hollow particles dispersed in the embedding resin, and observed with a transmission electron microscope (JEM-2100, available from JEOL Ltd.) to determine the position of the black material. A part of the black material was exposed while another part was present in the shells of the particles (the black material was present on the shell surfaces and in the shells).

### (Production of molded article)

Five grams of the obtained hollow particles and 195 g of a TPV resin (MILASTOMER 7030BS, containing carbon black, available from Mitsui Chemicals, Inc.) were weighed and mixed in a cup. The mixture was molded into a molded article using an 8-inch roll mill (191-TM, available from Yasuda Seiki Seisakusho, Ltd.) at 110°C.

### (Example 2)

Hollow particles and a molded article were produced as in Example 1, except that the amount of cyclohexane added was changed from 200 parts by weight to 500 parts by weight.

### (Example 3)

Hollow particles and a molded article were produced as in Example 1, except that the amount of cyclohexane added was changed from 200 parts by weight to 800 parts by weight.

### (Example 4)

Hollow particles and a molded article were produced as in Example 2, except that the carbon black was changed to #2350 (available from Mitsubishi Chemical Corporation, primary average particle size 15 nm, specific surface area 320 m²/g, DBP oil absorption 65 cm³/100 g).

### (Example 5)

Hollow particles and a molded article were produced as in Example 2, except that the carbon black was changed to MA14 (available from Mitsubishi Chemical Corporation, primary average particle size 40 nm, specific surface area 56 m²/g, DBP oil absorption 73 cm³/100 g).

### (Example 6)

Hollow particles and a molded article were produced as in Example 2, except that the carbon black was changed to MA220 (available from Mitsubishi Chemical Corporation, primary average particle size 55 nm, specific surface area 36 m²/g, DBP oil absorption 93 cm³/100 g).

### (Example 7)

To 250 parts by weight of ion-exchanged water were added 75 parts by weight of sodium chloride, 30 parts by weight of colloidal silica (active ingredient 20% by weight), 2.0 parts by weight of polyvinylpyrrolidone, and 0.6 parts by weight of ethylenediaminetetraacetic acid·4Na salt. The obtained mixture was then adjusted to pH 2.0 to 3.0 to give an aqueous dispersion medium.

Separately, a monomer composition of 0.2 parts by weight of acrylonitrile, 5.5 parts by weight of methacrylonitrile, 4 parts by weight of methacrylic acid, and 0.3 parts by weight of methyl acrylate was mixed with 500 parts by weight of cyclohexane and 1.6 parts by weight of a di-sec-butyl peroxydicarbonate-containing solution (active ingredient 50%) to give an oily mixture.

To this oily mixture were added 0.2 parts by weight of an amine salt of polyether ester (DISPARLON-234, available from Kusumoto Chemicals, Ltd.) and 0.39 parts by weight of carbon black (MA100, available from Mitsubishi Chemical Corporation, primary average particle size 24 nm, specific surface area 110 m²/g) as a black material. The mixture was sonicated for dispersing treatment, put in an autoclave, and mixed.

The solution was then added to the aqueous medium and suspended to give a dispersion.

The obtained dispersion was mixed by stirring with a homogenizer, fed into a nitrogen-purged pressure polymerizer, and reacted under pressure (0.5 MPa) at 60°C for 20 hours to give a reaction product. Filtration and water washing of the reaction product were repeated, followed by drying to give hollow particles.

The obtained hollow particles were used to produce a molded article as in Example 1.

### (Example 8)

Hollow particles and a molded article were produced as in Example 8, except that a monomer composition of 3.3 parts by weight of acrylonitrile, 2.5 parts by weight of methacrylonitrile, 3 parts by weight of methacrylic acid, and 1.2 parts by weight of methyl methacrylate was used.

### (Example 9)

Thirty parts by weight of colloidal silica (active ingredient 20% by weight) (available from Asahi Denka Kogyo K.K., primary average particle size: 20 nm) as a dispersant and 2.0 parts by weight of polyvinylpyrrolidone (available from BASF) were added to 250 parts by weight of ion-exchanged water to give an aqueous dispersion medium.

Two parts by weight of acrylonitrile, 3 parts by weight of methacrylonitrile, 4 parts by weight of methacrylic acid, and 1 part by weight of methyl methacrylate were mixed to give a monomer composition as a homogeneous solution. To the solution were added 0.2 parts by weight of an amine salt of polyether ester (DISPARLON-234, available from Kusumoto Chemicals, Ltd.) as an additive and 0.39 parts by weight of carbon black (MA100, available from Mitsubishi Chemical Corporation, primary average particle size 24 nm, specific surface area 110 m²/g) as a black material. The mixture was sonicated for dispersion treatment and then put in an autoclave. Further, 0.8 parts by weight of 2,2'-azobisisobutyronitrile and 0.6 parts by weight of 2,2'-azobis(2,4-dimethylvaleronitrile) as polymerization initiators and 500 parts by weight of cyclohexane were added and mixed in the autoclave.

Thereafter, the resulting mixture was added to the aqueous medium and suspended to give a dispersion.

The obtained dispersion was mixed by stirring with a homogenizer, fed into a nitrogen-purged pressure polymerizer, and reacted under pressure (0.5 MPa) at 60°C for 20 hours to give a reaction product. Filtration and water washing of the reaction product were repeated, followed by drying to give hollow particles.

### (Example 10)

Hollow particles and a molded article were produced as in Example 1, except that the amount of cyclohexane added was changed from 200 parts by weight to 100 parts by weight.

### (Example 11)

Hollow particles and a molded article were produced as in Example 1, except that the amount of cyclohexane added was changed from 200 parts by weight to 2,700 parts by weight.

### (Example 12)

Hollow particles and a molded article were produced as in Example 2, except that the amount of cyclohexane added was changed from 200 parts by weight to 3,500 parts by weight.

### (Example 13)

Hollow particles and a molded article were produced as in Example 2, except that the amount of carbon black added was changed from 0.26 parts by weight to 0.52 parts by weight.

### (Example 14)

Hollow particles and a molded article were produced as in Example 2, except that the amount of carbon black added was changed from 0.26 parts by weight to 1.12 parts by weight.

### (Example 15)

Hollow particles and a molded article were produced as in Example 2, except that 0.26 parts by weight of Solvent Black 3 (black dye, OIL BLACK 860, available from Orient Chemical Industries Co., Ltd.) was added instead of 0.26 parts by weight of carbon black.

### (Example 16)

Hollow particles and a molded article were produced as in Example 1, except that the amount of cyclohexane added was changed from 200 parts by weight to 250 parts by weight.

### (Example 17)

Hollow particles and a molded article were produced as in Example 1, except that the amount of cyclohexane added was changed from 200 parts by weight to 90 parts by weight.

### (Comparative Example 1)

Hollow particles and a molded article were produced as in Example 1, except that no black material was added.

### (Comparative Example 2)

Hollow particles and a molded article were produced as in Example 1, except that the amount of cyclohexane added was changed from 200 parts by weight to 40 parts by weight.

### (Comparative Example 3)

Hollow particles and a molded article were produced as in Example 1, except that the amount of cyclohexane added was changed from 200 parts by weight to 4,500 parts by weight.

### (Evaluation method)

The properties of the obtained hollow particles and molded articles were evaluated by the following methods. Table 1 shows the results.

### (1) Evaluation of hollow particles

### (1-1) Measurement of number average particle size

The molded article was cut to give a cross section. The particle size of at least 50 particles in the cross section was measured with a SEM or the like, and the average was determined as the number average particle size.

### (1-2) Shell thickness

The molded article was cut to give a cross section. The shell thickness of 10 hollow particles in the cross section was measured with a SEM or the like at five random sites for each particle, and the average was calculated as the number average particle size.

### (2) Evaluation of molded article

### (2-1) Evaluation of appearance (white spots)

The number of white spots was counted on the surface (1 mm square) of the molded article using an optical microscope and evaluated in accordance with the following criteria.

fewer than 10 spots: ∘∘∘ (Excellent)
10 or more and fewer than 20 spots: ∘∘ (Very good)
20 or more and fewer than 50 spots: ∘ (Good)
50 or more and fewer than 70 spots: Δ (Fair)
70 or more spots: × (Poor)

### (2-2) Evaluation of appearance (color difference)

The L*, a*, b* values were measured using a chroma meter (CM-26dG, available from Konica Minolta, Inc.) at five random sites on the molded article sample. The average of the color differences from a base resin containing no hollow particles, ΔE*ab = √((ΔL*)^2 + (Δa*)^2(Δb*)^2), was calculated and evaluated in accordance with the following criteria.

less than 0.5: ∘∘∘ (Excellent)
0.5 or greater and less than 1.0: ∘∘ (Very good)
1.0 or greater and less than 2.0: ∘ (Good)
2.0 or greater and less than 3.0: Δ (Fair)
3.0 or greater: × (Poor)

### (2-3) Surface roughness

The surface roughness (Rz value) of a surface of the molded article was measured using a 3D profilometer (available from Keyence Corporation). The measured Rz value was evaluated in accordance with the following criteria.

less than 50 µm: ∘∘ (Very good)
50 um or greater and 80 um or less: ∘ (Good)
greater than 80 um and 100 um or less: Δ (Fair)
greater than 100 µm: × (Poor)

### (2-4) Strength

The 25% compressive strength of the molded article was measured at 23°C by a method in conformity with JIS K 6767. The obtained 25% compressive strength was evaluated in accordance with the following criteria.
less than 30 kPa: ∘∘ (Very good)
30 kPa or greater and less than 40 kPa: ∘ (Good)
40 kPa or greater and less than 50 kPa: Δ (Fair)
50 kPa or greater: × (Poor)

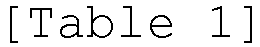

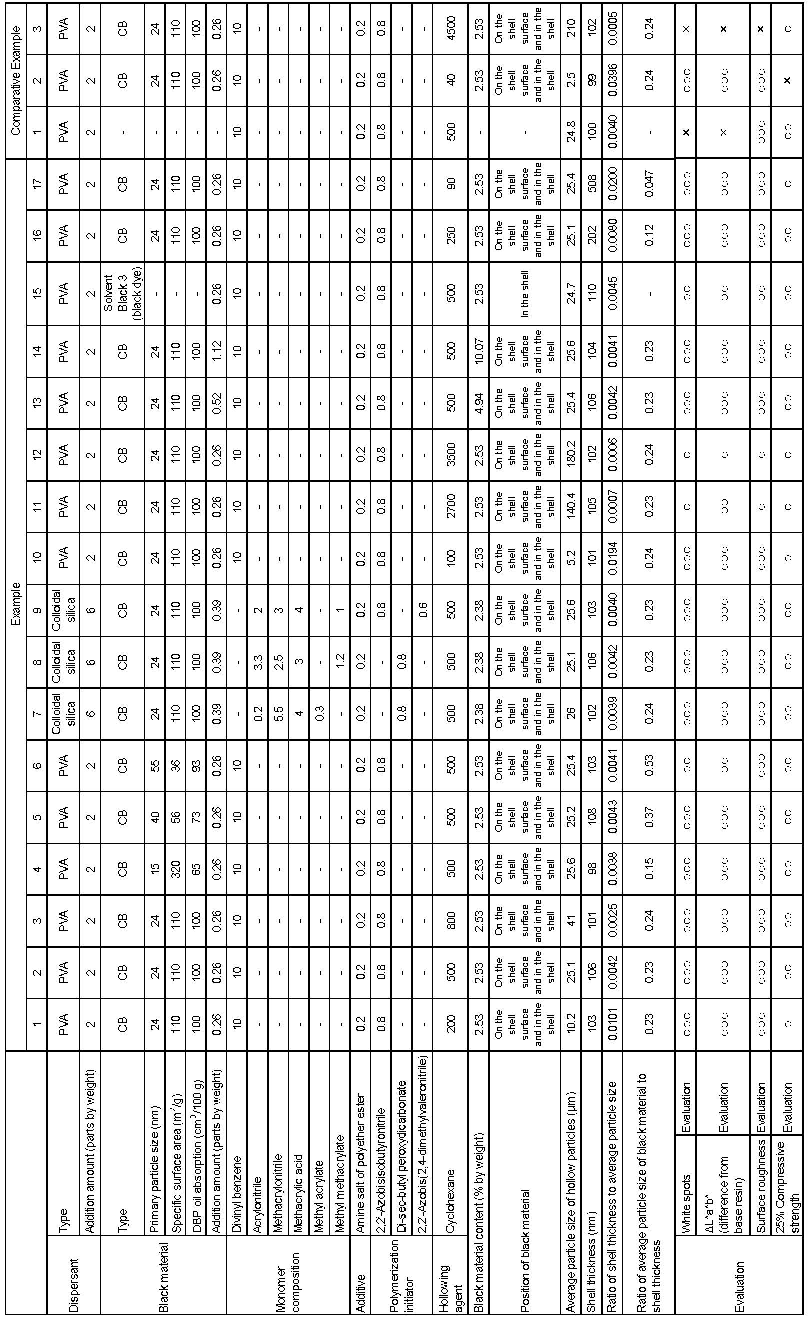

### INDUSTRIAL APPLICABILITY

The present invention can provide a molded article that is less prone to appearance defects due to surface irregularities or whitening and that also has high strength.

## Claims

1. A molded article comprising
hollow particles each including a shell, the shell containing a resin and a black material,
the hollow particles having an average particle size of 3 to 200 um.

2. The molded article according to claim 1,
wherein the black material is a black pigment or a black dye.

3. The molded article according to claim 2,
wherein the black pigment is at least one selected from the group consisting of a carbonous black pigment and an oxide black pigment.

4. The molded article according to claim 2,
wherein the black dye is an organic black dye.

5. The molded article according to any one of claims 1 to 4,
wherein the hollow particles have a black material content of 0.01 to 30% by weight relative to the hollow particles as a whole.

6. The molded article according to any one of claims 1 to 5, further comprising a colorant.
